# EUROPEAN PATENT SPECIFICATION

(11) **EP 3 356 773 B1**
(45) Date of publication and mention of the grant of the patent: **13.10.2021**
(21) Application number: 16757790.7
(22) Date of filing: 16.08.2016
(51) Int. Cl.: G01G 19/02, B65G 69/00

(54) **SYSTEMS AND METHODS FOR VERIFYING CONTENTS DECLARATION**
SYSTEME UND VERFAHREN ZUR ÜBERPRÜFUNG VON INHALTSDEKLARATIONEN
SYSTÈMES ET PROCÉDÉS PERMETTANT DE VÉRIFIER UNE DÉCLARATION DE CONTENUS

(30) Priority: 01.10.2015 US 201562235661 P
(43) Date of publication of application: 08.08.2018
(73) Proprietor: Illinois Tool Works Inc., Glenview, IL 60025 (US)
(72) Inventor: HOLMES, Peter, Glenview, Illinois 60025 (US); WHITE, David, Glenview, Illinois 60025 (US)
(74) Representative: HGF
(86) International application number: PCT/US2016/047133
(87) International publication number: WO 2017/058376

(56) References cited:
- NZ-A- 330 920
- US-A1- 2013 015 002

## Description

### RELATED APPLICATIONS

This application relates to and claims priority benefits from U.S. Provisional Patent Application No. 62/235,661 entitled "Contents Declaration Confirmation System and Method," filed October 1, 2015.

### FIELD OF EMBODIMENTS OF THE DISCLOSURE

Embodiments of the present disclosure generally relate to systems and methods for detecting, verifying, and confirming declared contents of a vehicle.

### BACKGROUND

Vehicle operators often dump unwanted articles in landfills. For example, operators of trucks often dump contents carried within a truck (such as within a dumping container, trailer, chamber, or the like) into a landfill. Landfill operators charge different rates for different types of discarded contents. For example, a landfill operator may charge a low (or no) fee for one type of contents, such as dirt. However, the landfill operator may charge an increased or high fee for another type of contents, such as used tires.

As can be appreciated, in order to determine the fee amount, the landfill operator first determines the actual contents of the material that is to be discarded into the landfill. In order to avoid fees (or reduce fees), unscrupulous individuals may not provide forthright details about the contents that are to be discarded from a vehicle. As such, a landfill operator often physically inspects the contents of the vehicle in order to verify the precise nature of the contents. To do so, the contents to be discarded are often first unloaded for manual inspection. As can be appreciated, manual inspection of contents of a vehicle may be labor and time intensive.

In general, known methods of inspecting contents are typically incapable of quickly, efficiently, and accurately verifying the actual contents of a vehicle.

### SUMMARY OF EMBODIMENTS OF THE DISCLOSURE

A need exists for a system and method of accurately determining types of contents with respect to declarations. A need exists for a system and method of accurately determined types of contents to be dumped within a landfill, for example. A need exists for a system and method of verifying the nature of declared contents of a vehicle.

With those needs in mind, the following invention is defined by claim 1 and 5. Further embodiments are defined by the dependent claims.

The weigh scale may include a weighbridge. The scanner may include one of an ultrasonic scanner, an infrared scanner, a laser scanner, or other such optical scanners.

A support may be coupled to the scanner. The support suspends the scanner over an inspection space into which the contents are positioned.

According to the invention, the verification control unit is configured to determine an actual weight of the contents based on the weight signal and a known weight of the vehicle. 2. According to the invention, the verification control unit is also configured to determine an actual volume of the contents based on the volume signal.

According to the invention, the verification control unit is configured to determine an actual density of the contents based on an actual weight of the contents and an actual volume of the contents. The verification control unit is configured to compare an actual density of the contents with a known density of declared contents to determine an accuracy of the contents declaration.

The present invention provides a method for verifying contents of a vehicle. The method includes weighing the vehicle with a weigh scale, outputting (from the weigh scale) a weight signal indicative of a weight of the vehicle, scanning the contents of at least a portion of the vehicle with a scanner, outputting (from the scanner) a volume signal indicative of a volume of the contents, receiving the weight signal and the volume signal with a verification control unit of a verification system, and verifying (by the verification control unit) a contents declaration based on the weight signal and the volume signal.

### BRIEF DESCRIPTION OF SEVERAL VIEWS OF THE DRAWINGS

Figure 1 illustrates a schematic diagram of a system for verifying contents of a vehicle, according to an embodiment of the present disclosure.
Figure 2 illustrates a simplified lateral view of a scanner secured to a support above an inspection space, according to an embodiment of the present disclosure.
Figure 3 illustrates a simplified lateral view of a scanner secured to a support above an inspection space, according to an embodiment of the present disclosure.
Figure 4 illustrates a simplified lateral view of a scanner secured to a support above an inspection space, according to an embodiment of the present disclosure.
Figure 5 illustrates a perspective top lateral view of a system for verifying contents of a vehicle, according to an embodiment of the present disclosure.
Figure 6 is a flow chart of a method of verifying declared contents of a vehicle, according to an embodiment of the present disclosure.

Before the embodiments of the disclosure are explained in detail, it is to be understood that the disclosure is not limited in its application to the details of construction and the arrangement of the components set forth in the following description or illustrated in the drawings. The disclosure is capable of other embodiments and of being practiced or being carried out in various ways.

### DETAILED DESCRIPTION OF EMBODIMENTS OF THE DISCLOSURE

Embodiments of the present disclosure provide systems and methods for detecting a fraudulent declaration of content disclosure, such as may be provided at a landfill. A vehicle operator may declare that contents in a payload area are a particular type (such as soil). For such contents, a landfill operator may not charge a fee. However, there may be a charge if the contents are of a different nature, such as used tires. In order to confirm the contents of a vehicle, embodiments of the present disclosure provide systems and methods of verifying that the stated contents are, in fact, the actual contents.

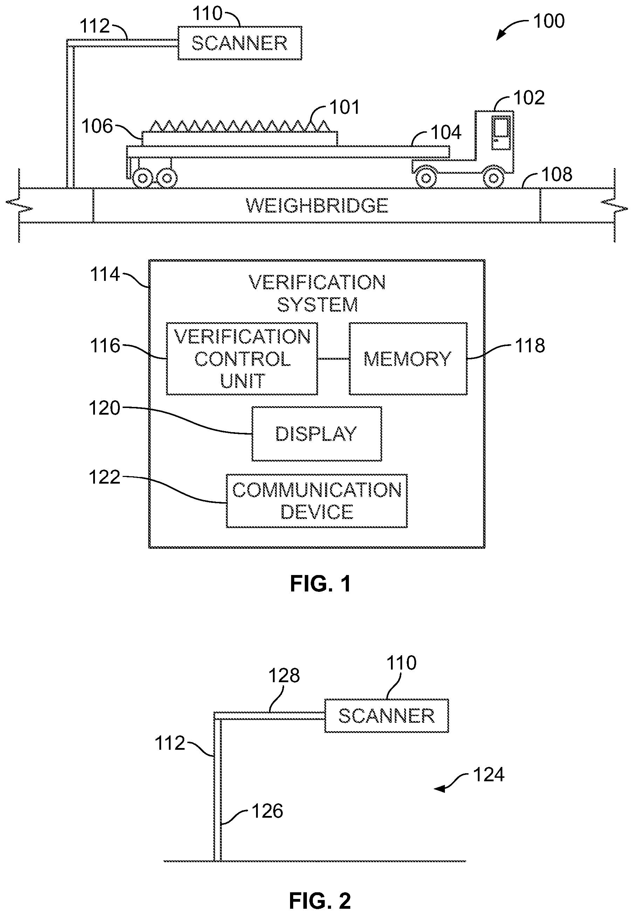

Figure 1 illustrates a schematic diagram of a system 100 for verifying contents 101 of a vehicle 102, according to an embodiment of the present disclosure. The vehicle 102 may be a truck having a trailer 104 that includes a retaining structure 106 (such as a container, chamber, dump bed, vessel, or the like) that retains the contents 101. It is to be understood, however, that the vehicle 102 may be various other types, such as a flatbed truck, an automobile, a locomotive coupled to one or more trailing cars, and/or the like.

The system 100 includes a weigh scale, such as a weighbridge 108, which is configured to weigh the vehicle 102 hauling the contents 101 that are to be unloaded. The vehicle 102 is moved (such as by being driven) onto the weighbridge 108, where the vehicle 102 is weighed. The system 100 also includes a scanner 110 that may be mounted on a support 112. The scanner 110 may be an ultrasonic scanner, an infrared scanner, a laser scanner, and/or the like that is configured to detect a volume of the contents 101 within the retaining structure 106.

The system 100 also includes a verification system 114 that includes a verification control unit 116 coupled to a memory 118. The verification control unit 116 is also coupled to a communication device 122, such as a transceiver, radio, one or more wired or wireless connections, and/or the like. The verification control unit 116 is in communication with the weighbridge 108 and the scanner 110 through the communication device 122, and/or through one or more wired or wireless connections. The system 100 may also include a display 120, such as a monitor, screen, panel, and/or the like. The verification system 114 may be, include, or be part of a personal computer, a laptop computer, a handheld device (such as a smart phone), and/or the like.

Figure 2 illustrates a simplified lateral view of the scanner 110 secured to the support 112 above an inspection space 124, according to an embodiment of the present disclosure. In this embodiment, the support 112 includes one or more beams, brackets, posts, columns, or the like. The support 112 includes a first portion 126 securely mounted to supporting surface, such as the ground, floor, upper surface of the weighbridge 108 (shown in Figure 1), and/or the like. The first portion 126 connects to a second portion 128 that connects to the scanner 110. The second portion 128 extends and suspends the scanner 110 over the inspection space 124, into which the contents 101 (shown in Figure 1) are to be positioned for inspection.

One or both of the first and second portions 124 and 126 of the support 112 may be configured to articulate or otherwise move in order to selectively move the scanner 110 between an inspection position over the inspection space 124, and a removed position, in which the scanner 110 is not over the inspection space 124. In at least one other embodiment, the first and second portions 124 and 126 are fixed in position to maintain the scanner 110 over the inspection space 124. The support 112 may include more or less portions than the first and second portions 124 and 126. For example, the support 112 may be or include a single arched support beam. In at least one other embodiment, the support 112 may include multiple beams, struts, ribs, and/or the like that may form a scaffold, a boom, platform, and/or the like.

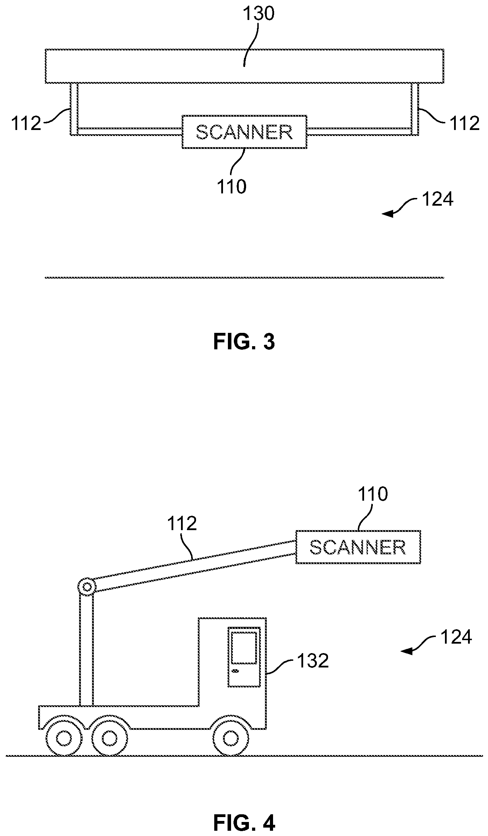

Figure 3 illustrates a simplified lateral view of the scanner 110 secured to the support 112 above the inspection space 124, according to an embodiment of the present disclosure. In this embodiment, the support 112 may include beams, posts, booms, gantries, and/or the like that couple the scanner 110 to a ceiling 130 over the inspection space 124.

Figure 4 illustrates a simplified lateral view of the scanner 110 secured to the support 112 above the inspection space 124, according to an embodiment of the present disclosure. In this embodiment, the support 112 may include beams, arms, and/or the like, such as described above with respect to Figure 2, that couple the scanner 110 to a moving platform 132, such a cart, truck, car, rail vehicle, and/or the like that is configured to selectively move the scanner 110 above and away from the inspection space 124.

Referring to Figures 2-4, various other types of supports 112 may be used to securely suspend the scanner 110 over the inspection space 124. In various embodiments, the scanner 110 may be fixed in position, and a vehicle may move through a scanning area of the scanner. In other embodiments, the vehicle may be parked, and the scanner 110 may be moved over the vehicle. For example, in at least one embodiment, the scanner 110 may be secured to an aerial drone that may be flown over the inspection space 124 during an inspection of a vehicle.

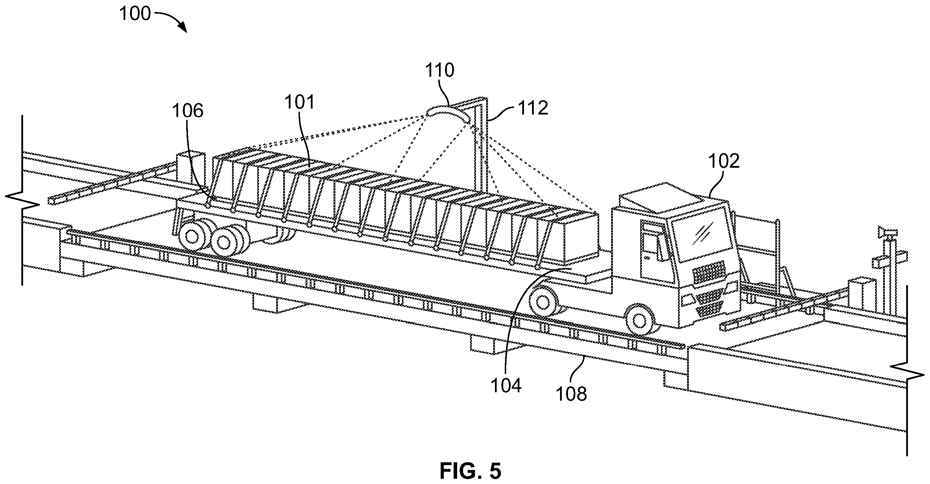

Figure 5 illustrates a perspective top lateral view of the system 100 for verifying the contents 101 of the vehicle 102, according to an embodiment of the present disclosure. Referring to Figures 1 and 5, in operation, the vehicle 102 is weighed on the weighbridge 108, and the contents 101 are scanned by the scanner 110. For example, the scanner 110 scans an open top of the retaining structure 106 of the vehicle 102 to determine a volume of the contents 101. The weighbridge 108 and the scanner 110 provide signals to the verification control unit 116 of the verification system 114 that allow the verification control unit 116 to determine a weight and volume of the vehicle 102, and/or a volume of the contents 101. In at least one embodiment, the verification control unit 116 may determine the volume of the contents 101 by subtracting a known volume of the vehicle 102 without contents from a detected volume of the vehicle 102 with the contents 101. In at least one other embodiment, the volume of the contents 101 may be scanned by the scanner 110, and the volume of the contents 101 may be directly determined therefrom.

Next, an operator of the vehicle 102 declares the nature of the contents 101. That is, the operator of the vehicle 102 provides a contents declaration. The contents declaration may be input into the verification control unit 116, such as through an input device (for example, a keyboard, a touchscreen on the display 120, and/or the like). Based on the weight and volume (as determined by the verification control unit 116 through analysis of the signals received from the weighbridge 108 and the scanner 110), the verification control unit 116 compares the contents declaration with known contents data stored in the memory 118 that is correlated with a known quantity of the contents. For example, the verification control unit 116 accesses the memory 118 to analyze stored weights and volumes of the type of contents being declared. The verification control unit 116 then compares the declaration with the stored information to determine whether the declaration is accurate.

The weight of product being carried may be determined on the weighbridge 108 by subtracting a tare weight (empty weight) of the vehicle 102 from a gross weight (vehicle weight plus contents weight). Volume may be used to determine the weight of the contents 101 being carried. The volume may be estimated using the scanner 110 above the open top of the retaining structure 106 of the vehicle 102. Depending on the average height of the contents 101 within the retaining structure 106, and with knowledge of the profile of the empty vehicle 102 (for example, data regarding the profile of the empty vehicle 102 may be stored in the memory 118 of the verification system 114), the verification control unit 116 is able to determine the volume of the contents 101. The verification control unit 116 may determine the weight of the contents 101 by estimating the average density of the contents 101 being carried and multiplying the density by the volume.

As noted, the verification control unit 116 determines actual attributes of the contents 101. The actual attributes include the actual weight, volume, and density of the contents 101. The weight and volume of the contents are determined through signals received from the weighbridge 108 and the scanner 110. Through knowledge of the weight (as detected by the weighbridge 108) and the volume of the contents (as detected by the scanner 110), the verification control unit 116 is able to determine the density of the contents 101. In particular, density equals weight divided by volume. Thus, the verification control unit 116 divides the weight of the contents 101 by the volume of the contents 101 to determine the density of the contents 101.

The verification control unit 116 compares the declaration of the contents 101 (that is, the contents declaration) with the actual attributes (such as the weight, volume, and density) of the contents 101 to generate a verification determination, which either confirms the contents declaration, or rejects the contents declaration. The verification control unit 116 checks the integrity of the declaration of the contents 101, such as by comparing the contents declaration (which, may be input into the verification control unit 116) with the weight of the vehicle 102 and/or the contents 101, as determined through one or more weight signals received from the weighbridge, and the volume of the contents 101, as determined through one or more volume signals received from the scanner 110. The verification control unit 116 may compare the computed density of the contents 101 with a density of contents from the declaration.

The verification control unit 116 may display results of the contents verification on the display 120. For example, if the declaration matches the actual contents as determined by the verification control unit 116, the verification control unit 116 may display a message on the display 120 that confirms the declaration. If, however, the declaration does not match the actual contents as determined by the verification control unit 116, the verification control unit 116 may display a message on the display 120 that rejects the declaration. In at least one other embodiment, the verification system 114 may include one or more speakers, and the verification control unit 116 may cause audio signals to be emitted through the speakers regarding the verification determination. In at least one embodiment, the verification system 114 may not include the display 120.

In at least one embodiment, the verification control unit 116 utilizes or otherwise includes trending software (which may be stored in the memory 118, for example) that is used to compare previously declared data, volumes, and weights of a vehicle (such as previous measurements), with new declared data (such as a new or current declaration), and assesses the probability of incorrect data in the new transaction data. The system 100 includes the combination of the weighbridge 108 (or other such weigh scale), the scanner 110, and the verification control unit 116 to determine the accuracy of a particular declaration of the contents 101. As such, the system 100 may be used at landfills, where a charged price for depositing the contents 101 may be determined by the weight and type of contents 101 being deposited.

The systems and methods of the present disclosure are non-intrusive. For example, the contents 101 do not need to be emptied to verify their nature. In at least one embodiment, the verification control unit 116 monitors a profile of the variation of densities of each product, and determines a probability that the stated contents are the actual contents. Embodiments of the present disclosure reduce a number of fraudulent declarations at a landfill, for example.

As described above, the verification control unit 116 may be used to control operation of the system 100. As used herein, the term "control unit," "unit," "central processing unit," "CPU," "computer," or the like may include any processor-based or microprocessor-based system including systems using microcontrollers, reduced instruction set computers (RISC), application specific integrated circuits (ASICs), digital signal processor (DSP), logic circuits, and any other circuit or processor including hardware, software, or a combination thereof capable of executing the functions described herein. Such are exemplary only, and are thus not intended to limit in any way the definition and/or meaning of such terms. For example, the verification control unit 116 may be or include one or more processors that are configured to control operation of the system 100.

The verification control unit 116 is configured to execute a set of instructions that are stored in one or more storage elements (such as one or more memories), in order to process data. For example, the control unit 116 may include or be coupled to one or more memories. The storage elements may also store data or other information as desired or needed. The storage elements may be in the form of an information source or a physical memory element within a processing machine.

The set of instructions may include various commands that instruct the verification control unit 116 as a processing machine to perform specific operations such as the methods and processes of the various embodiments of the subject matter described herein. The set of instructions may be in the form of a software program. The software may be in various forms such as system software or application software. Further, the software may be in the form of a collection of separate programs, a program subset within a larger program or a portion of a program. The software may also include modular programming in the form of object-oriented programming. The processing of input data by the processing machine may be in response to user commands, or in response to results of previous processing, or in response to a request made by another processing machine.

The diagrams of embodiments herein illustrate one or more control or processing units, such as the verification control unit 116. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the verification control unit 116 may represent processing circuitry such as one or more of a field programmable gate array (FPGA), application specific integrated circuit (ASIC), microprocessor(s), and/or the like. The circuits in various embodiments may be configured to execute one or more algorithms to perform functions described herein. The one or more algorithms may include aspects of embodiments disclosed herein, whether or not expressly identified in a flowchart or a method.

As used herein, the terms "software" and "firmware" are interchangeable, and include any computer program stored in memory for execution by a computer, including RAM memory, ROM memory, EPROM memory, EEPROM memory, and non-volatile RAM (NVRAM) memory. The above memory types are exemplary only, and are thus not limiting as to the types of memory usable for storage of a computer program.

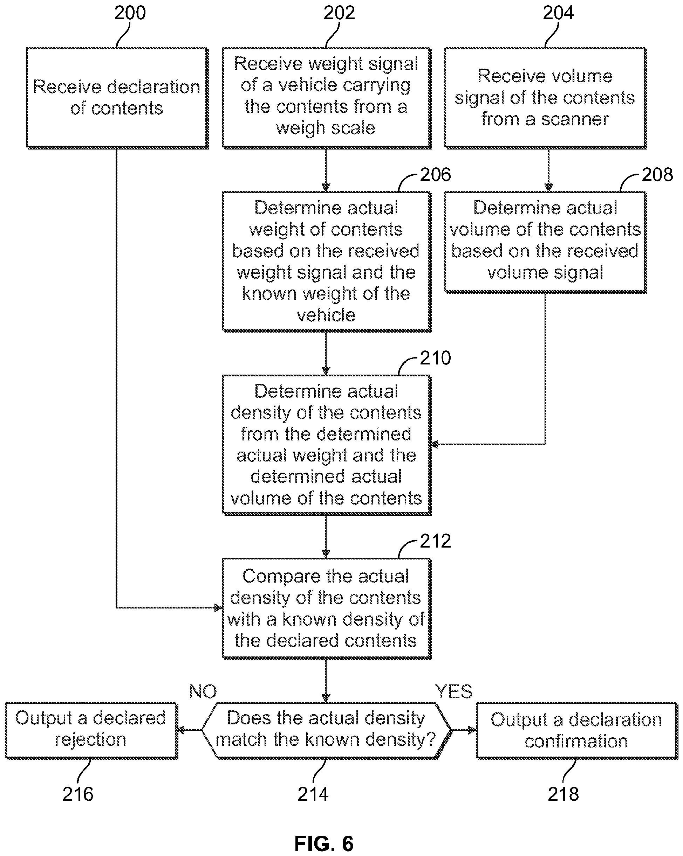

Figure 6 is a flow chart of a method of verifying declared contents of a vehicle, according to an embodiment of the present disclosure. In at least one embodiment, the verification control unit 116 shown in Figure 1 is configured to operate according to the flow chart shown in Figure 6.

Referring to Figures 1 and 6, the method begins at 200, at which the verification control unit 116 receives a declaration of contents. The declaration of contents may be provided by an operator of the vehicle 102 and input into the verification control unit 116, which may store the declaration of contents, such as within a portion of the memory 118 (such as a short term portion of the memory 118).

At 202, the verification control unit 116 receives a weight signal (indicative of the actual weight) of the vehicle 102 carrying the contents from a weigh scale, such as the weighbridge 108. The verification control unit 116 may store the weight signal, such as within a portion of the memory 118 (such as a short term portion of the memory 118).

At 204, the verification control unit 116 receives a volume signal (indicative of the actual volume) of the contents 101 from the scanner 110. The verification control unit 116 may store the volume signal, such as within a portion of the memory 118 (such as a short term portion of the memory 118).

The steps 200, 202, and 204 may occur at or about the same time. In at least one other embodiment, the step 200 may occur before the steps 202 and/or 204. In at least one other embodiment, the steps 202 and/or 204 may occur before the step 200. In at least one other embodiment, the step 202 may occur before or after the step 204.

After the weight signal is received at 202, the verification control unit 116 determines, at 206, the actual weight of the contents 101 based on the received weight signal and the known weight of the vehicle 102. The known weight of the vehicle 102 may be stored in the memory 118, for example. In at least one embodiment, the known weight may be empty weight of the vehicle (that is, the weight of the vehicle without contents). At 208, the verification control unit 116 determines an actual volume of the contents 101 based on the received volume signal.

Next, at 210, the verification control unit 116 determines an actual density of the contents from the determined actual weight and the determined actual volume of the contents 101. After the actual density of the contents is determined at 210, the verification control unit 116 then compares the actual density of the contents with a known density of the declared contents at 212. For example, a known density of various types of materials may be stored within the memory 118, and/or input into the verification control unit 116.

At 214, the verification control unit 116 determines if the actual density of the contents 101 matches the known density of the declared contents. If the actual density does not match the known density at 214, the verification control unit outputs a declaration rejection at 216. If, however, the actual density does match the known density at 214, the verification control unit outputs a declaration confirmation at 218.

Referring to Figures 1-6, embodiments of the present disclosure provide systems and methods for verifying the nature of declared contents. Embodiments of the present disclosure provide systems and methods for accurately determining types of contents to be dumped within a landfill.

While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Variations and modifications of the foregoing are possible within the scope of the present disclosure. The embodiments described herein explain the best modes known for practicing the disclosure and will enable others skilled in the art to utilize the disclosure.

To the extent used in the appended claims, the terms "including" and "in which" are used as the plain-English equivalents of the respective terms "comprising" and "wherein." Moreover, to the extent used in the following claims, the terms "first," "second," and "third," etc. are used merely as labels, and are not intended to impose numerical requirements on their objects.

Various features of the disclosure are set forth in the following claims.

## Claims

1. A system (100) for verifying contents (101) of a vehicle (102), the system (100) comprising:
- a weigh scale (108) that is configured to weigh the vehicle (102) and output a weight signal indicative of a weight of the vehicle (102);
**characterized by**
- a scanner (110) that is configured to scan the contents (101) of at least a portion of the vehicle (102) and output a volume signal indicative of a volume of the contents (101); and
- a verification system (114) including a verification control unit (116) that is configured to:
- receive the weight signal and the volume signal,
- determine an actual weight of the contents (101) based on the weight signal and a known weight of the vehicle (102),
- determine an actual volume of the contents (101) based on the volume signal,
- determine an actual density of the contents (101) based on the actual weight of the contents (101) and the actual volume of the contents (101), and
- compare an actual density of the contents (101) with a known density of declared contents (101) to verify a contents declaration.

2. The system (100) of claim 1,
wherein the weigh scale (108) comprises a weighbridge.

3. The system (100) of claim 1 or 2,
wherein the scanner (110) comprises one of an ultrasonic scanner, an infrared scanner, or a laser scanner.

4. The system (100) of one of the preceding claims,
further comprising a support (112) coupled to the scanner (110), wherein the support (112) suspends the scanner (110) over an inspection space (124) into which the contents (101) are positioned.

5. A method for verifying contents (101) of a vehicle (102), the method comprising:
- weighing the vehicle (102) with a weigh scale (108);
- outputting, from the weigh scale (108), a weight signal indicative of a weight of the vehicle (102);
**characterized by**
- scanning the contents (101) of at least a portion of the vehicle (102) with a scanner (110);
- outputting, from the scanner (110), a volume signal indicative of a volume of the contents (101);
- receiving the weight signal and the volume signal with a verification control unit (116) of a verification system (114); and
- verifying, by the verification control unit (116), a contents declaration based on the weight signal and the volume signal,
wherein the verifying comprises
- determining an actual weight of the contents (101) based on the received weight signal and a known weight of the vehicle (102),
- determining an actual volume of the contents (101) based on the received volume signal,
- determining an actual density of the contents (101) based on an actual weight of the contents (101) and an actual volume of the contents (101), and
- determining an actual density of the contents (101) with a known density of declared contents (101) to determine an accuracy of the contents declaration.

6. The method of claim 5,
wherein the weigh scale (108) comprises a weighbridge.

7. The method of claim 5 or 6,
wherein the scanner (110) comprises one of an ultrasonic scanner, an infrared scanner, or a laser scanner.

8. The method of one of claims 5 to 7,
further comprising using a support (112) coupled to the scanner (110) to suspend the scanner (110) over an inspection space (124) into which the contents (101) are positioned.

## Patentansprüche

1. System (100) zur Überprüfung von Inhalten (101) eines Fahrzeugs (102), das System (100) aufweisend:
- eine Waage (108), die so konfiguriert ist, dass sie das Fahrzeug (102) wiegt und ein Gewichtssignal ausgibt, das ein Gewicht des Fahrzeugs (102) angibt;
**gekennzeichnet durch**
- einen Scanner (110), der so konfiguriert ist, dass er den Inhalt (101) zumindest eines Teils des Fahrzeugs (102) scannt und ein Volumensignal ausgibt, das ein Volumen des Inhalts (101) angibt; und
- ein Überprüfungssystem (114), das eine Überprüfungssteuereinheit (116) beinhaltet, die so konfiguriert ist, dass sie:
- das Gewichtssignal und das Volumensignal empfängt,
- ein tatsächliches Gewicht der Inhalte (101) basierend auf dem Gewichtssignal und einem bekannten Gewicht des Fahrzeugs (102) bestimmt,
- ein tatsächliches Volumen der Inhalte (101) basierend auf dem Volumensignal bestimmt,
- eine tatsächliche Dichte der Inhalte (101) basierend auf dem tatsächlichen Gewicht der Inhalte (101) und dem tatsächlichen Volumen der Inhalte (101) bestimmt, und
- eine tatsächliche Dichte des Inhalts (101) mit einer bekannten Dichte des deklarierten Inhalts (101) vergleicht, um eine Inhaltsdeklaration zu überprüfen.

2. System (100) nach Anspruch 1,
wobei die Waage (108) eine Wiegebrücke aufweist.

3. System (100) nach Anspruch 1 oder 2,
wobei der Scanner (110) einen Ultraschallscanner, einen Infrarotscanner oder einen Laserscanner aufweist.

4. System (100) nach einem der vorhergehenden Ansprüche, ferner aufweisend einen Träger (112), der mit dem Scanner (110) gekoppelt ist, wobei der Träger (112) den Scanner (110) über einen Inspektionsraum (124) aufhängt, in dem die Inhalte (101) positioniert sind.

5. Verfahren zur Überprüfung von Inhalten (101) eines Fahrzeugs (102), das Verfahren aufweisend:
- Wiegen des Fahrzeugs (102) mit einer Waage (108);
- Ausgeben, von der Waage (108), eines Gewichtssignals, das ein Gewicht des Fahrzeugs (102) angibt;
**gekennzeichnet durch**
- Scannen des Inhalts (101) zumindest eines Teils des Fahrzeugs (102) mit einem Scanner (110);
- Ausgeben, von dem Scanner (110), eines Volumensignals, das ein Volumen des Inhalts (101) angibt;
- Empfangen des Gewichtssignals und des Volumensignals mit einer Überprüfungssteuereinheit (116) eines Überprüfungssystems (114); und
- Überprüfen, durch die Überprüfungssteuereinheit (116), einer Inhaltsdeklaration basierend auf dem Gewichtssignal und dem Volumensignal,
wobei das Überprüfen aufweist:
- Bestimmen eines tatsächlichen Gewichts der Inhalte (101) basierend auf dem empfangenen Gewichtssignal und einem bekannten Gewicht des Fahrzeugs (102),
- Bestimmen eines tatsächlichen Volumens des Inhalts (101) basierend auf dem empfangenen Volumensignal,
- Bestimmen einer tatsächlichen Dichte der Inhalte (101) basierend auf einem tatsächlichen Gewicht der Inhalte (101) und einem tatsächlichen Volumen der Inhalte (101), und
- Bestimmen einer tatsächlichen Dichte der Inhalte (101) mit einer bekannten Dichte von deklarierten Inhalten (101), um eine Genauigkeit der Inhaltsdeklaration zu bestimmen.

6. Verfahren nach Anspruch 5,
wobei die Waage (108) eine Wiegebrücke aufweist.

7. Verfahren nach Anspruch 5 oder 6,
wobei der Scanner (110) einen Ultraschallscanner, einen Infrarotscanner oder einen Laserscanner aufweist.

8. Verfahren nach einem der Ansprüche 5 bis 7,
ferner aufweisend das Verwenden eines Trägers (112), der mit dem Scanner (110) gekoppelt ist, um den Scanner (110) über einen Inspektionsraum (124) aufzuhängen, in dem die Inhalte (101) positioniert sind.

## Revendications

1. Système (100) pour la vérification de contenus (101) d'un véhicule (102), le système (100) comportant :
- une balance (108) qui est configurée pour peser le véhicule (102) et délivrer un signal de poids indicatif d'un poids du véhicule (102) ;
**caractérisé par**
- un scanner (110) qui est configuré pour scanner les contenus (101) d'au moins une partie du véhicule (102) et délivrer un signal de volume indicatif d'un volume des contenus (101) ; et
- un système de vérification (114) comprenant une unité de commande de vérification (116) qui est configurée pour :
- recevoir le signal de poids et le signal de volume,
- déterminer un poids réel des contenus (101) sur base du signal de poids et d'un poids connu du véhicule (102) ,
- déterminer un volume réel des contenus (101) sur base du signal de volume,
- déterminer une densité réelle des contenus (101) sur base du poids réel des contenus (101) et du volume réel des contenus (101), et
- comparer une densité réelle des contenus (101) avec une densité connue de contenus déclarés (101) pour vérifier une déclaration de contenus.

2. Système (100) selon la revendication 1,
dans lequel la balance (108) comporte un pont-bascule.

3. Système (100) selon la revendication 1 ou 2,
dans lequel le scanner (110) comporte un parmi un scanner à ultrasons, un scanner à infrarouge, ou un scanner à laser.

4. Système (100) selon l'une quelconque des revendications précédentes,
comportant en outre un support (112) couplé au scanner (110), dans lequel le support (112) suspend le scanner (110) au-dessus d'un espace d'inspection (124) dans lequel les contenus (101) sont positionnés.

5. Procédé pour la vérification de contenus (101) d'un véhicule (102), le procédé comportant :
- le pesage du véhicule (102) avec une balance (108);
- la délivrance, à partir de la balance (108), d'un signal de poids indicatif d'un poids du véhicule (102) ;
**caractérisé par**
- le scannage des contenus (101) d'au moins une partie du véhicule (102) avec un scanner (110) ;
- la délivrance, à partir du scanner (110), d'un signal de volume indicatif d'un volume des contenus (101);
- la réception du signal de poids et du signal de volume avec une unité de commande de vérification (116) d'un système de vérification (114) ; et
- la vérification, par l'unité de commande de vérification (116), d'une déclaration de contenus sur base du signal de poids et du signal de volume,
dans lequel la vérification comporte
- la détermination d'un poids réel des contenus (101) sur base du signal de poids reçu et d'un poids connu du véhicule (102),
- la détermination d'un volume réel du contenu (101) sur base du signal de volume reçu,
- la détermination d'une densité réelle des contenus (101) sur base d'un poids réel des contenus (101) et d'un volume réel des contenus (101), et
- la détermination d'une densité réelle des contenus (101) avec une densité connue de contenus déclarés (101) pour déterminer une précision de la déclaration de contenus.

6. Procédé selon la revendication 5,
dans lequel la balance (108) comporte un pont-bascule.

7. Procédé selon la revendication 5 ou 6,
dans lequel le scanner (110) comporte un parmi un scanner à ultrasons, un scanner à infrarouge, ou un scanner à laser.

8. Procédé selon l'une quelconque des revendications 5 à 7, comportant en outre l'utilisation d'un support (112) couplé au scanner (110) pour suspendre le scanner (110) au-dessus d'un espace d'inspection (124) dans lequel les contenus (101) sont positionnés.
